# EUROPEAN PATENT APPLICATION

(11) **EP 3 343 980 A1**
(43) Date of publication of application: **04.07.2018**
(21) Application number: 17211190.8
(22) Date of filing: 29.12.2017
(51) Int. Cl.: H04W 48/00, H04W 48/16

(54) **WIRELESS NETWORK ACCESS METHOD, APPARATUS AND SYSTEM**

(30) Priority: 30.12.2016 CN 201611260849
(71) Applicant: Beijing Xiaomi Mobile Software Co., Ltd., Beijing 100085 (CN)
(72) Inventor: JIANG, Xiaowei, Beijing, Beijing 100085 (CN)
(74) Representative: Grunert, Marcus

(57) **Abstract**

The present disclosure relates to a wireless network access method, apparatus and system. The method includes: acquiring (203) slice configuration information transmitted by at least one base station, the slice configuration information indicating a network slice allowed to access in a cell corresponding to the base station; determining (204) at least one suitable cell according to the slice configuration information, the suitable cell including a corresponding cell of one of the at least one network slice, the corresponding cell providing a current trigger random access service; selecting (205) a suitable cell as a target cell; and accessing (206) a target network slice of the target cell by using a random access mode, the target network slice being configured to bear the current trigger random access service. The present disclosure implements random access of a terminal when a network slicing technology is used in a radio access network.

## Description

### TECHNICAL FIELD

The present invention generally relates to the field of wireless communication technologies, and more particularly, to a wireless network access method, apparatus and system.

### BACKGROUND

With the development of communication technologies, a network slicing technology is introduced in a 5th Generation (5G) system. The network slicing technology allows a network to be divided into a plurality of slices. Different types of services are transferred in different network slices, not interfering with each other.

In the 5G system, the services may be divided into three types: an enhanced mobile broadband service, a massive machine-type communication services, and an ultra-reliable and low latency communication services. The three types of services are distributed to three network slices. An accounting strategy, a security strategy and a QoS (Quality of Service) strategy of each network slice may be different. Massive service congestion occurring in a network slice does not have a negative effect on smooth operation of the services in other network slices.

The network slicing technology is not only involved in a core network, but also is involved in a radio access network (RAN). When the network slicing technology is used in the RAN, how to implement a random access of a terminal is a problem to be solved urgently.

### SUMMARY

Embodiments of the present invention provide a wireless network access method, apparatus and system according to the independent claims. The technical solutions are described as follows.

According to a first aspect of the embodiments of the present disclosure, a wireless network access method is provided, which includes:
acquiring slice configuration information transmitted by at least one base station, the slice configuration information indicating a network slice allowed to access in a cell corresponding to the base station;
determining at least one suitable cell according to the slice configuration information, the suitable cell referring to the network slice allowed to access including a cell of a network slice corresponding to a current trigger random access service;
selecting, from the at least one suitable cell, a suitable cell as a target cell; and
accessing a target network slice of the target cell by using a random access mode, the target network slice being configured to bear the current trigger random access service.

Alternatively, the accessing the target network slice of the target cell by using the random access mode includes:
acquiring preamble configuration information transmitted by a target base station corresponding to the target cell, the preamble configuration information being used for indicating an alternative preamble resource when accessing each network slice of the target cell;
selecting, according to the preamble configuration information, a preamble code from the alternative preamble resource when accessing the target network slice of the target cell; and
accessing the target network slice of the target cell by using the random access mode according to the selected preamble code.

Alternatively, the slice configuration information includes at least one of: slice ID information, slice type information, and service type information.

The slice ID information is used for indicating an ID of the network slice allowed to access in the cell corresponding to the base station.

The slice type information is used for indicating a type of the network slice allowed to access in the cell corresponding to the base station.

The service type information is used for indicating a service type corresponding to the network slice allowed to access in the cell corresponding to the base station.

Alternatively, the method further includes:
determining the current trigger random access service according to an uplink service requirement or a downlink service requirement.

Alternatively, the method further includes:
receiving a radio resource control (RRC) connection reconfiguration message transmitted by a target base station, the RRC connection reconfiguration message including: at least one network slice ID, and RRC connection reconfiguration information respectively corresponding to each network slice ID; and
modifying, for a network slice indicated by each network slice ID, an RRC connection related to the network slice according to the RRC connection reconfiguration information corresponding to the network slice ID.

Alternatively, the method further includes:
transmitting a buffer status report to a target base station, the buffer status report including: at least one network slice ID, and a cache status respectively corresponding to a network slice indicated by each network slice ID.

Alternatively, the method further includes:
receiving uplink resource allocation information transmitted by a target base station, the uplink resource allocation information including: at least one network slice ID, and an uplink resource correspondingly allocated to a network slice indicated by each network slice ID;
and/or
receiving downlink resource allocation information transmitted by the target base station, the downlink resource allocation information including: at least one network slice ID, and a downlink resource correspondingly allocated to a network slice indicated by each network slice ID.

Alternatively, the method further includes:
generating a MAC protocol data unit (PDU) respectively corresponding to each network slice by multiplexing data transferred by a radio bearer of each network slice by means of a media access control (MAC) layer.

Alternatively, the method further includes:
detecting, when any network slice triggers a scheduling request, whether a target PUCCH exists in a physical uplink control channel (PUCCH) resource of a serving cell corresponding to the network slice, the target PUCCH referring to a PUCCH having a scheduling request resource;
transmitting the scheduling request to a target base station by means of the target PUCCH when the target PUCCH exists; or
selecting, when the target PUCCH does not exist, a random access channel from the serving cell corresponding to the network slice or a primary serving cell to transmit a random access request to the target base station, a function of the random access request being identical to that of the scheduling request.

Alternatively, the method further includes:
transmitting power headroom information to a target base station, the power headroom information including: at least one network slice ID, and a power headroom respectively corresponding to a network slice indicated by each network slice ID.

According to a second aspect of the embodiments of the present disclosure, a wireless network access method is provided, which includes:
generating slice configuration information according to the network slice allowed to access in the cell corresponding to the base station;
broadcasting the slice configuration information;
receiving a random access message transmitted by a terminal, the random access message being used for requesting to access a target network slice of the cell corresponding to the base station, the random access message being transmitted by the terminal after determining the cell corresponding to the base station as a suitable cell, the suitable cell referring to the network slice allowed to access including a cell of a network slice corresponding to a current trigger random access service, the target network slice being configured to bear the current trigger random access service; and
controlling the terminal to access the target network slice according to the random access message.

Alternatively, the method further includes:
allocating a preamble resource to each network slice of the cell corresponding to the base station;
generating preamble configuration information, the preamble configuration information being used for indicating an alternative preamble resource when accessing each network slice of the cell corresponding to the base station; and
broadcasting the preamble configuration information, the terminal being configured to select, according to the preamble configuration information in a process of accessing the target network slice by using a random access mode, a preamble code from the alternative preamble resource when accessing the target network slice.

Alternatively, the slice configuration information includes at least one of: slice ID information, slice type information, and service type information.

The slice ID information is used for indicating an ID of the network slice allowed to access in the cell corresponding to the base station.

The slice type information is used for indicating a type of the network slice allowed to access in the cell corresponding to the base station.

The service type information is used for indicating a service type corresponding to the network slice allowed to access in the cell corresponding to the base station.

Alternatively, the method further includes:
transmitting a radio resource control (RRC) connection reconfiguration message to the terminal, the RRC connection reconfiguration message including: at least one network slice ID, and RRC connection reconfiguration information respectively corresponding to each network slice ID.

Alternatively, the method further includes:
receiving a buffer status report transmitted by the terminal, the buffer status report including: at least one network slice ID, and a cache status respectively corresponding to a network slice indicated by each network slice ID.

Alternatively, the method further includes:
transmitting uplink resource allocation information to the terminal, the uplink resource allocation information including: at least one network slice ID, and an uplink resource correspondingly allocated to a network slice indicated by each network slice ID;
and/or
transmitting downlink resource allocation information to the terminal, the downlink resource allocation information including: at least one network slice ID, and a downlink resource correspondingly allocated to a network slice indicated by each network slice ID.

Alternatively, the method further includes:
receiving a scheduling request transmitted by the terminal via a target PUCCH when detecting that the target PUCCH exists in a PUCCH resource of a serving cell corresponding to a network slice requesting to trigger a scheduling request, or receiving a random access request transmitted by the terminal via a random access channel selected from the serving cell corresponding to the network slice or a primary serving cell when detecting that the target PUCCH does not exist in the PUCCH resource of the serving cell corresponding to the network slice requesting to trigger the scheduling request.

The target PUCCH refers to a PUCCH having a scheduling request resource, and a function of the random access request is identical to that of the scheduling request.

Alternatively, the method further includes:
receiving power headroom information transmitted by the terminal, the power headroom information including: at least one network slice ID, and a power headroom respectively corresponding to a network slice indicated by each network slice ID.

According to a third aspect of the embodiments of the present disclosure, a wireless network access apparatus is provided, which includes:
an acquiring module, configured to acquire slice configuration information transmitted by at least one base station, the slice configuration information indicating a network slice allowed to access in a cell corresponding to the base station;
a first determining module, configured to determine at least one suitable cell according to the slice configuration information, the suitable cell referring to the network slice allowed to access including a cell of a network slice corresponding to a current trigger random access service;
a selecting module, configured to select, from the at least one suitable cell, a suitable cell as a target cell; and
an access module, configured to access a target network slice of the target cell by using a random access mode, the target network slice being configured to bear the current trigger random access service.

Alternatively, the access module includes:
an acquiring submodule, configured to acquire preamble configuration information transmitted by a target base station corresponding to the target cell, the preamble configuration information being used for indicating an alternative preamble resource when accessing each network slice of the target cell;
a selecting submodule, configured to select, according to the preamble configuration information, a preamble code from the alternative preamble resource when accessing the target network slice of the target cell; and
an access submodule, configured to access the target network slice of the target cell by using the random access mode according to the selected preamble code.

Alternatively, the slice configuration information includes at least one of: slice ID information, slice type information, and service type information.

The slice ID information is used for indicating an ID of the network slice allowed to access in the cell corresponding to the base station.

The slice type information is used for indicating a type of the network slice allowed to access in the cell corresponding to the base station.

The service type information is used for indicating a service type corresponding to the network slice allowed to access in the cell corresponding to the base station.

Alternatively, the apparatus further includes:
a second determining module, configured to determine the current trigger random access service according to an uplink service requirement or a downlink service requirement.

Alternatively, the apparatus further includes:
a first receiving module, configured to receive a RRC connection reconfiguration message transmitted by a target base station, the RRC connection reconfiguration message including: at least one network slice ID, and RRC connection reconfiguration information respectively corresponding to each network slice ID; and
a modifying module, configured to modify, for a network slice indicated by each network slice ID, an RRC connection related to the network slice according to the RRC connection reconfiguration information corresponding to the network slice ID.

Alternatively, the apparatus further includes:
a first transmitting module, configured to transmit a buffer status report to a target base station, the buffer status report including: at least one network slice ID, and a cache status respectively corresponding to a network slice indicated by each network slice ID.

Alternatively, the apparatus further includes: a second receiving module;
the second receiving module is configured to:
receive uplink resource allocation information transmitted by a target base station, the uplink resource allocation information including: at least one network slice ID, and an uplink resource correspondingly allocated to a network slice indicated by each network slice ID;
and/or
receive downlink resource allocation information transmitted by the target base station, the downlink resource allocation information including: at least one network slice ID, and a downlink resource correspondingly allocated to a network slice indicated by each network slice ID.

Alternatively, the apparatus further includes:
a generating module, configured to generate a MAC PDU respectively corresponding to each network slice by multiplexing data transferred by a radio bearer of each network slice by means of a MAC layer.

Alternatively, the apparatus further includes:
a detecting module, configured to detect, when any network slice triggers a scheduling request, whether a target PUCCH exists in a PUCCH resource of a serving cell corresponding to the network slice, the target PUCCH referring to a PUCCH having a scheduling request resource;
a second transmitting module, configured to transmit the scheduling request to a target base station by means of the target PUCCH when the target PUCCH exists; and
a third transmitting module, configured to select, when the target PUCCH does not exist, a random access channel from the serving cell corresponding to the network slice or a primary serving cell to transmit a random access request to the target base station, a function of the random access request being identical to that of the scheduling request.

Alternatively, the apparatus further includes:
a fourth transmitting module, configured to transmit power headroom information to a target base station, the power headroom information including: at least one network slice ID, and a power headroom respectively corresponding to a network slice indicated by each network slice ID.

According to a fourth aspect of the embodiments of the present disclosure, a wireless network access apparatus is provided, which includes:
a first generating module, configured to generate slice configuration information according to the network slice allowed to access in the cell corresponding to the base station;
a first broadcasting module, configured to broadcast the slice configuration information;
a first receiving module, configured to receive a random access message transmitted by a terminal, the random access message being used for requesting to access a target network slice of the cell corresponding to the base station, the random access message being transmitted by the terminal after determining the cell corresponding to the base station as a suitable cell, the suitable cell referring to the network slice allowed to access including a cell of a network slice corresponding to a current trigger random access service, the target network slice being configured to bear the current trigger random access service; and
a control module, configured to control the terminal to access the target network slice according to the random access message.

Alternatively, the apparatus further includes:
an allocating module, configured to allocate a preamble resource to each network slice of the cell corresponding to the base station;
a second generating module, configured to generate preamble configuration information, the preamble configuration information being used for indicating an alternative preamble resource when accessing each network slice of the cell corresponding to the base station; and
a second broadcasting module, configured to broadcast the preamble configuration information, the terminal being configured to select, according to the preamble configuration information in a process of accessing the target network slice by using a random access mode, a preamble code from the alternative preamble resource when accessing the target network slice.

Alternatively, the slice configuration information includes at least one of: slice ID information, slice type information, and service type information.

The slice ID information is used for indicating an ID of the network slice allowed to access in the cell corresponding to the base station.

The slice type information is used for indicating a type of the network slice allowed to access in the cell corresponding to the base station.

The service type information is used for indicating a service type corresponding to the network slice allowed to access in the cell corresponding to the base station.

Alternatively, the apparatus further includes:
a first transmitting module, configured to transmit an RRC connection reconfiguration message to the terminal, the RRC connection reconfiguration message including: at least one network slice ID, and RRC connection reconfiguration information respectively corresponding to each network slice ID.

Alternatively, the apparatus further includes:
a second receiving module, configured to receive a buffer status report transmitted by the terminal, the buffer status report including: at least one network slice ID, and a cache status respectively corresponding to a network slice indicated by each network slice ID.

Alternatively, the apparatus further includes a second transmitting module.

The second transmitting module is configured to:
transmit uplink resource allocation information to the terminal, the uplink resource allocation information including: at least one network slice ID, and an uplink resource correspondingly allocated to a network slice indicated by each network slice ID;
and/or
transmit downlink resource allocation information to the terminal, the downlink resource allocation information including: at least one network slice ID, and a downlink resource correspondingly allocated to a network slice indicated by each network slice ID.

Alternatively, the apparatus further includes:
a third receiving module, configured to receive a scheduling request transmitted by the terminal via a target PUCCH when detecting that the target PUCCH exists in a PUCCH resource of a serving cell corresponding to a network slice requesting to trigger a scheduling request, or receive a random access request transmitted by the terminal via a random access channel selected from the serving cell corresponding to the network slice or a primary serving cell when detecting that the target PUCCH does not exist in the PUCCH resource of the serving cell corresponding to the network slice requesting to trigger the scheduling request.

The target PUCCH refers to a PUCCH having a scheduling request resource, and a function of the random access request is identical to that of the scheduling request.

Alternatively, the apparatus further includes:
a fourth receiving module, configured to receive power headroom information transmitted by the terminal, the power headroom information including: at least one network slice ID, and a power headroom respectively corresponding to a network slice indicated by each network slice ID.

According to a fifth aspect of the embodiments of the present disclosure, a wireless network access system is provided, which includes: a terminal and a base station.

The terminal includes the wireless network access apparatus according to the third aspect and any alternative design thereof.

The base station includes the wireless network access apparatus according to the fourth aspect and any alternative design thereof.

According to a sixth aspect of the embodiments of the present disclosure, a wireless network access apparatus is provided, which includes:
a processor, and
a memory, configured to store executable instructions of the processor.

The processor is configured to:
acquire slice configuration information transmitted by at least one base station, the slice configuration information indicating a network slice allowed to access in a cell corresponding to the base station;
determine at least one suitable cell according to the slice configuration information, the suitable cell referring to the network slice allowed to access including a cell of a network slice corresponding to a current trigger random access service;
select, from the at least one suitable cell, a suitable cell as a target cell; and
access a target network slice of the target cell by using a random access mode, the target network slice being configured to bear the current trigger random access service.

According to a seventh aspect of the embodiments of the present disclosure, a wireless network access apparatus is provided, which includes:
a processor, and
a memory, configured to store executable instructions of the processor.

The processor is configured to:
generate slice configuration information according to the network slice allowed to access in the cell corresponding to the base station;
broadcast the slice configuration information;
receive a random access message transmitted by a terminal, the random access message being used for requesting to access a target network slice of the cell corresponding to the base station, the random access message being transmitted by the terminal after determining the cell corresponding to the base station as a suitable cell, the suitable cell referring to the network slice allowed to access including a cell of a network slice corresponding to a current trigger random access service, the target network slice being configured to bear the current trigger random access service; and
control the terminal to access the target network slice according to the random access message.

According to an eighth aspect of the embodiment of the present disclosure, there is provided a computer program which, when being executed on a processor of a terminal, performs any one of the above methods according to the first aspect.

According to a ninth aspect of the embodiment of the present disclosure, there is provided a computer program which, when being executed on a processor of a base station, performs any one of the above methods according to the second aspect.

The technical solutions provided by the embodiments of the present disclosure may include following beneficial effects.

Slice configuration information transmitted by at least one base station is acquired by a terminal. A target cell is selected according to the acquired slice configuration information, and a target network slice of the target cell is accessed by using a random access mode, so that the current trigger random access service is borne via the target network slice. In this way, it is implemented random access of the terminal when a network slicing technology is used in a radio access network (RAN), it is ensured an access procedure of each network slice is mutually independent, and a service of a network slice does not have a negative effect on other network slices.

It should be understood that the above general description and the detailed description below are merely exemplary and explanatory, and do not limit the present disclosure.

### BRIEF DESCRIPTION OF THE DRAWINGS

The accompanying drawings herein are incorporated in and constitute a part of this specification, illustrate embodiments conforming to the present disclosure and together with the description serve to explain the principles of the present disclosure.
FIG. 1 is a schematic diagram showing an application scenario according to an exemplary embodiment;
FIG. 2 is a flowchart showing a wireless network access method according to an exemplary embodiment;
FIG. 3 is a block diagram showing a wireless network access apparatus according to an exemplary embodiment;
FIG. 4 is a block diagram showing a wireless network access apparatus according to another exemplary embodiment;
FIG. 5 is a schematic structural diagram of a base station shown according to an exemplary embodiment; and
FIG. 6 is a schematic structural diagram of a terminal shown according to an exemplary embodiment.

### DETAILED DESCRIPTION

Descriptions will now be made in detail to exemplary embodiments, examples of which are illustrated in the accompanying drawings. When accompanying figures are mentioned in the following descriptions, the same numbers in different drawings represent the same or similar elements, unless otherwise represented. The implementations set forth in the following exemplary embodiments do not represent all implementations consistent with the present disclosure. Instead, they are merely examples of apparatuses and methods consistent with aspects related to the present disclosure as recited in the appended claims.

The network architecture and the service scenario are described in the embodiments of the present disclosure to more clearly explain the technical solutions of the embodiments of the present disclosure, but not constitute limitation on the technical solutions provided by the embodiments of the present disclosure. Those of ordinary skill in the art may understand that with the evolution of the network architecture and appearance of new service scenarios, the technical solutions provided by the embodiments of the present disclosure are also applicable to similar technical problems.

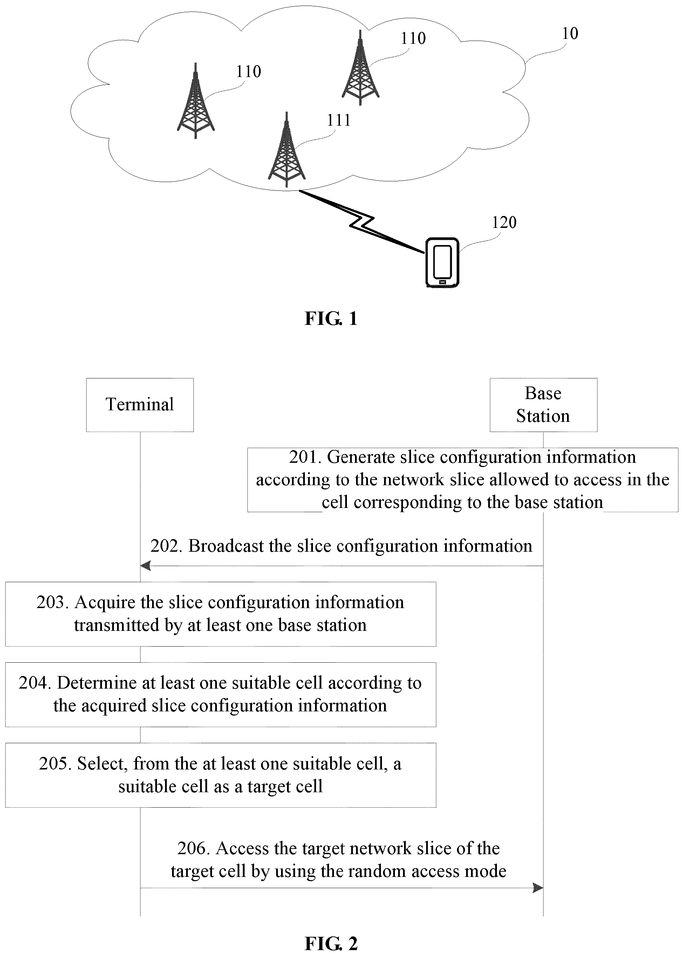

FIG. 1 is a schematic diagram showing an application scenario according to an exemplary embodiment. The application scenario includes a plurality of base stations 110 and terminals 120. Each of the base stations 110 is deployed in a radio access network (RAN) 10.

Typically there are a plurality of terminals 120. One or more terminals 120 may be distributed in a cell managed by each base station 110. In the embodiment of the present disclosure, a target base station may be any one of a plurality of the base stations 110. Schematically, as shown in FIG. 1, the target base station is denoted by a reference number 111.

Intercommunication between the base stations 110 and the terminals 120 are implemented via a certain air interface technology, for example, a cellular technology. Technical solutions described in the embodiments of the present disclosure may be applied to a Long Term Evolution (LTE) system, and also may be applied to a subsequent evolved system of the LTE system, for example, an LTE-Advanced (LTE-A) system or a 5G system, etc.

In the embodiments of the present disclosure, the terms "network" and "system" are often alternately used, but those skilled in the art may understand the meanings thereof.

The terminals involved in the embodiments of the present disclosure may include various handheld devices having wireless communication functions, vehicle-mounted devices, wearable devices, computing devices, or other processing devices connected to wireless modems, and user equipment (UE), mobile stations (MS), and terminal devices in various forms, etc. For ease of description, the devices mentioned above are collectively referred to as the terminals.

An access network equipment in the RAN involved in the embodiments of the present disclosure may be a base station (BS), which is an apparatus arranged in the RAN to provide the wireless communication function to the terminal. The base station may include one of a macro base station, a micro base station, a relay station, and an access point in various forms, etc. In a system adopting different wireless access technologies, names of devices having base station functions may be different. For example, in the LTE system, the base station is referred to as an evolved NodeB (eNB or eNodeB); and in the 3G communication system, the base station is referred to as a Node B, etc. With the evolution of the communication technologies, the name "base station" may likely be changed. For ease of description, in the embodiments of the present disclosure, the apparatuses providing the wireless communication functions for the terminals are collectively referred to as base stations or BS.

An embodiment of the present disclosure provides a wireless network access method and an apparatus and a system based on this method to solve the problem of how to implement random access of a terminal when a network slicing technology is used in a RAN. This method ensures an access procedure of each network slice is mutually independent, and a service of a network slice does not have a negative effect on other network slices. The embodiments of the present disclosure will be further described in detail below based on common aspects involved in the embodiments of the present disclosure.

FIG. 2 is a flowchart showing a wireless network access method according to an exemplary embodiment. The method may be applied to the application scenario as shown in FIG. 1. The method may include following steps.

In Step 201, the base station generates slice configuration information according to the network slice allowed to access in the cell corresponding to the base station.

The slice configuration information may indicate the network slice allowed to access in the cell corresponding to the base station. The cell corresponding to the base station refers to a cell managed by the base station, namely, an area that can be covered by the signal of the base station.

Alternatively or additionally, the slice configuration information may include at least one of: slice ID information, slice type information, and service type information.

The slice ID information indicates an ID of the network slice allowed to access in the cell corresponding to the base station. For example, the slice ID information includes an ID of the network slice allowed and/or prohibited to access in the cell corresponding to the base station. The network slice ID is used for uniquely identifying a network slice, and different network slices correspond to different network slice IDs.

The slice type information indicates a type of the network slice allowed to access in the cell corresponding to the base station. For example, the slice type information includes a type of the network slice allowed and/or prohibited to access in the cell corresponding to the base station. The type of the network slice may be partitioned according to a service type borne by the network slice. For example, the first type of network slice is used for bearing an enhanced Mobile Broadband (eMBB) service, the second type of network slice is used for bearing a massive Machine-type Communication (mMTC) service, and the third type of network slice is used for bearing an Ultra-reliable and Low Latency Communication (URLLC) service. One or more network slices used for bearing the same type of service type belong to the same type of network slice.

The service type information is used for indicating a service type corresponding to the network slice allowed to access in the cell corresponding to the base station. For example, the service type information includes a service type corresponding to the network slice allowed and/or prohibited to access in the cell corresponding to the base station. A corresponding mapping relation between the network slice and the service type may be preset.

Furthermore, the partition of the above service type is merely exemplary and explanatory, and is not intended to limit the present disclosure. In practical application, the service type may be partitioned according to actual demands.

In Step 202, the base station broadcasts the slice configuration information.

For example, the base station may broadcast the slice configuration information in a system message. The system message may be a system information block (SIB) message such as a SIB1 message.

Alternatively or additionally, the base station also performs the following steps: allocating a preamble resource to each network slice of the cell corresponding to the base station; generating preamble configuration information, the preamble configuration information may indicate an alternative preamble resource when accessing each network slice of the cell corresponding to the base station; and broadcasting the preamble configuration information.

In a possible implementation, for each network slice allowed to access in the cell corresponding to the base station, the base station correspondingly allocates a dedicated preamble resource to the network slice, so that the terminal selects a preamble code when accessing the network slice. In another possible implementation, for each type of network slice allowed to access in the cell corresponding to the base station, the base station correspondingly allocates a dedicated preamble resource to this type of network slice, so that the terminal selects a preamble code from the preamble resource when accessing this type of network slice. The above type may be partitioned according to the network slice introduced above or from a view of service.

Alternatively or additionally, the preamble configuration information further includes time-frequency resource configuration information in addition to the preamble resource. The time-frequency resource configuration information indicates a time-frequency resource to transmit the preamble code. Subsequently, in the process of random access after selecting the preamble code, the terminal occupies, according to the time-frequency resource indicated by the time-frequency resource configuration information to transmit the selected preamble code, the corresponding time-frequency resource to transmit a random access message carrying the selected preamble code.

Alternatively or additionally, the base station broadcasts cell access information in the system messages, where the cell access information includes the slice configuration information and the preamble configuration information.

In Step 203, the terminal acquires the slice configuration information transmitted by at least one base station.

Alternatively or additionally, the terminal acquires the cell access information broadcasted by the at least one base station via the system message, where the cell access information includes the slice configuration information and the preamble configuration information.

In Step 204, the terminal determines at least one suitable cell according to the acquired slice configuration information.

When the terminal selects or reselects a cell, at least one suitable cell is determined according to the acquired slice configuration information. The suitable cell refers to the network slice allowed to access including a cell of a network slice corresponding to a current trigger random access service. After acquiring slice configuration information transmitted by a certain base station, the terminal determines the network slice allowed to access in a cell corresponding to the base station according to the slice configuration information. When the network slice allowed to access in a certain cell includes the network slice corresponding to the current trigger random access service, the terminal determines the cell as a suitable cell. Otherwise, when the network slice allowed to access in a certain cell does not include the network slice corresponding to the current trigger random access service, the terminal determines the cell as an unsuitable cell.

Furthermore, the network slice corresponding to the current trigger random access service refers to a network slice that can be used for bearing the current trigger random access service. The terminal determines the current trigger random access service according to an uplink service requirement or a downlink service requirement. The uplink service requirement is determined by the terminal according to service data needed to be transmitted to a network side. The downlink service requirement is determined by the terminal according to a paging message transmitted by the network side. The paging message may carry the ID, type or corresponding service type of the network slice required for the downlink service. The terminal determines the network slice used for bearing the current trigger random access service according to the paging message.

Alternatively or additionally, when the terminal is configured with network slice selection assistance information (NSSAI), the terminal determines at least one suitable cell by combining the acquired slice configuration information and the NSSAI. The NSSAI is used for selecting a network slice, the type of the network slice or the service type corresponding to the network slice when the terminal is subject to an initial access. The NSSAI may be preconfigured for the terminal by the network side.

In Step 205, the terminal selects, from the at least one suitable cell, a suitable cell as a target cell.

When the number of the suitable cells determined by the terminal is one, the terminal selects the suitable cell as the target cell. When the number of the suitable cells determined by the terminal is more than one, the terminal selects the suitable cell having the maximum received signal strength as the target cell.

In Step 206, the terminal accesses the target network slice of the target cell by using the random access mode.

The target network slice is configured to bear the current trigger random access service. Taking the target cell being a cell provided by the target cell as an example, the target network slice is determined by the terminal by selecting from the network slice allowed to access in the target cell.

Alternatively or additionally, the Step 206 includes following substeps.
1. The terminal acquires the preamble configuration information transmitted by the target base station corresponding to the target cell.

The preamble configuration information transmitted by the target base station indicates an alternative preamble resource when accessing each network slice of the target cell corresponding to the target base station.
2. The terminal selects, according to the preamble configuration information, a preamble code from the alternative preamble resource when accessing the target network slice of the target cell.
3. The terminal accesses the target network slice of the target cell by using the random access mode according to the selected preamble code.

The terminal transmits the random access message to a target terminal. The random access message is used for requesting to access the target network slice of the target cell corresponding to the target base station, and the random access message carries the selected preamble code. Alternatively or additionally, when the preamble configuration information transmitted by the target base station further includes time-frequency resource configuration information, the terminal occupies, according to the time-frequency resource indicated by the time-frequency resource configuration information to transmit the selected preamble code, the corresponding time-frequency resource to transmit the random access message carrying the selected preamble code.

After receiving the random access message transmitted by the terminal, the target base station controls the terminal to access the target network slice according to the random access message. The above random access process may be a competitive random access, or may be a noncompetitive random access, which is not limited by the embodiments of the present disclosure.

Furthermore, when the target base station does not transmit the preamble configuration information to the terminal, the terminal selects a preamble code from common preamble resource and accesses the target network slice of the target cell by using the random access mode according to the selected preamble code. The common preamble resource refers to preamble resource allocated by the network side for use by the terminal for a random access when no network slicing technology is adopted.

In conclusion, according to the method provided by this embodiment, slice configuration information transmitted by at least one base station is acquired by a terminal, a target cell is selected according to the acquired slice configuration information, and a target network slice of the target cell is accessed by using a random access mode, so that the current trigger random access service is borne via the target network slice. In this way, it is implemented random access of the terminal when a network slicing technology is used in a radio access network (RAN), it is ensured an access procedure of each network slice is mutually independent, and a service of a network slice does not have a negative effect on other network slices.

In the embodiments of the present disclosure, taking the terminal accessing the target network slice of the target cell corresponding to the target base station as an example, after the terminal accesses the above target network slice, the terminal is changed from an idle state to a connected state. The terminal in the connected state may exchange information with the target base station. Information exchange procedures when the network slicing technology is used in the RAN are introduced below taking some information as an example.

### 1. RRC connection reconfiguration message

The RRC connection reconfiguration message is used for modifying an RRC connection, for example, establishing, modifying or releasing a radio bearer (RB), executing handover, preparing, modifying or releasing measurement, and so on. When the network slicing technology is used in the RAN, in the RRC connection reconfiguration message, each network slice may need to be differentiated.

The target base station transmits the RRC connection reconfiguration message to the terminal. The RRC connection reconfiguration message includes: at least one network slice ID, and RRC connection reconfiguration information respectively corresponding to each network slice ID. The network slice indicated by the network slice ID may include the target network slice accessing the terminal. Alternatively or additionally, the RRC connection reconfiguration message further includes at least one of: an index of the network slice, a radio bearer included in the network slice, a serving cell (for example, the ID of the serving cell and the index of the serving cell) corresponding to the network slice, and a maximum allowable transmission power of the network slice.

The terminal receives the RRC connection reconfiguration message transmitted by the target base station. For a network slice indicated by each network slice ID, the terminal modifies an RRC connection related to the network slice according to the RRC connection reconfiguration information corresponding to the network slice ID.

### 2. Buffer status report

The terminal reports, to the base station, an amount of information needed to be transmitted to an uplink buffer thereof according to a buffer status report (BSR). When the network slicing technology is used in the RAN, in the buffer status report, each network slice needs to be differentiated.

The terminal respectively determines a cache status corresponding to each network slice according to the network slice to which each RB belongs. The cache status corresponding to a certain network slice refers to the amount of information that is needed to be transmitted by an RB belonging to the network slice to the target base station. Alternatively or additionally, a signaling radio bearer (SRB) (such as SRB1 and SRB2) belongs to the network slice used for transmitting a connection establishing request. The terminal transmits a buffer status report to the target base station. The buffer status report includes: at least one network slice ID, and a cache status respectively corresponding to a network slice indicated by each network slice ID. The target base station receives the buffer status report transmitted by the terminal. Subsequently, the target base station may allocate, to the terminal, an uplink resource respectively corresponding to each network slice according to the buffer status report.

### 3. Uplink/downlink resource allocation information

The uplink resource allocation information indicates an uplink resource allocated by the base station to the terminal. When the network slicing technology is used in the RAN, in the uplink resource allocation information, each network slice needs to be differentiated.

The target base station transmits the uplink resource allocation information to the terminal. The uplink resource allocation information includes: at least one network slice ID, and an uplink resource correspondingly allocated to a network slice indicated by each network slice ID. The terminal receives the uplink resource allocation information transmitted by the target base station, and correspondingly allocates the uplink resource, according to the uplink resource allocation information, to a logic channel corresponding to the radio bearer included in each network slice.

The downlink resource allocation information indicates a downlink resource allocated by the base station to the terminal. When the network slicing technology is used in the RAN, in the downlink resource allocation information, each network slice needs to be differentiated. The target base station transmits the downlink resource allocation information to the terminal. The downlink resource allocation information includes: at least one network slice ID, and a downlink resource correspondingly allocated to a network slice indicated by each network slice ID. The terminal receives the downlink resource allocation information transmitted by the target base station, and determines the downlink resource occupied by the radio bearer included in each network slice according to the downlink resource allocation information.

### 4. Scheduling request

The terminal informs the base station whether the terminal needs the uplink resource via a scheduling request (SR), so that the uplink data are transmitted. When the network slicing technology is used in the RAN, the terminal selects, according to the network slice triggering the scheduling request, a physical uplink control channel (PUCCH) having a scheduling request resource from the PUCCH resource of a corresponding serving cell to transmit the scheduling request.

When any network slice triggers a scheduling request, the terminal detects whether a target PUCCH exists in the PUCCH resource of the serving cell corresponding to the network slice, where the target PUCCH refers to a PUCCH having a scheduling request resource. The terminal transmits the scheduling request to the target base station by means of the target PUCCH when the target PUCCH exists. Correspondingly, the target base station receives the scheduling request transmitted by the terminal. When the target PUCCH does not exist, the terminal selects a random access channel from the serving cell corresponding to the network slice or a primary serving cell to transmit a random access request to the target base station. Correspondingly, the target base station receives the random access request transmitted by the terminal. The function of the random access request is identical to that of the scheduling request, namely, used for instructing to allocate the uplink resource to the base station.

### 5. Power headroom information

The terminal informs the base station, by reporting the power headroom information to the base station, of the remaining power headroom from the maximum transmission power. When the network slicing technology is used in the RAN, in the power headroom information, each network slice may need to be differentiated.

The terminal transmits the power headroom information to the target base station. The power headroom information may include: at least one network slice ID, and a power headroom respectively corresponding to a network slice indicated by each network slice ID. The target base station receives the power headroom information transmitted by the terminal, and determines the power headroom of the terminal in each network slice according to the power headroom information.

Alternatively or additionally, the terminal generates a MAC PDU respectively corresponding to each network slice by multiplexing data transferred by a radio bearer of each network slice by means of a media access control (MAC) layer. When a plurality of MAC PDUs are generated, the terminal decides by itself which MAC PDU is a MAC control unit (for example, a BSR, a cell radio network temporary identifier (C-RNTI), a discontinuous reception (DRX), and so on) of the MAC layer placed into.

In the embodiments of the present disclosure, when the network slicing technology is used in the RAN, each network slice is managed independently. Thus, it is ensured that each network slice is mutually independent, a service of a network slice does not have a negative effect on other network slices, and the management of each network slice is more flexible.

Here, steps related to the terminal in the above embodiment may be individually implemented as a wireless network access method used in the terminal. Similarly, steps related to the base station may be individually implemented as a wireless network access method used in the base station.

The following are apparatus embodiments of the present disclosure, which may be employed to execute the method embodiments of the present disclosure. Reference is made to the method embodiments of the present disclosure for details not disclosed in the apparatus embodiments of the present disclosure.

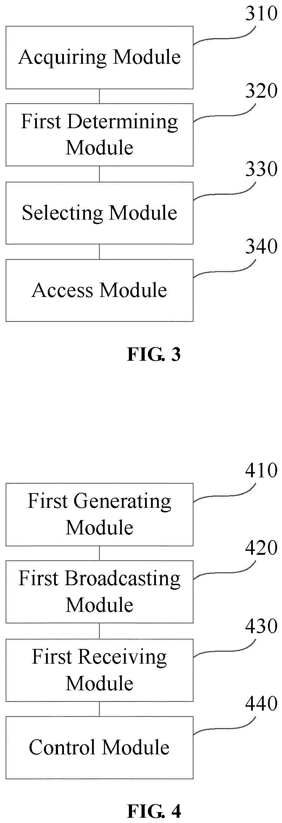

FIG. 3 is a block diagram showing a wireless network access apparatus according to an exemplary embodiment. The apparatus has a function of implementing the above wireless network access method used in a terminal. The function may be implemented either by means of hardware or by executing corresponding software by means of the hardware. The apparatus may include: an acquiring module 310, a first determining module 320, a selecting module 330, and an access module 340.

The acquiring module 310 is configured to acquire slice configuration information transmitted by at least one base station, the slice configuration information being used for indicating a network slice allowed to access in a cell corresponding to the base station.

The first determining module 320 is configured to determine at least one suitable cell according to the slice configuration information, the suitable cell referring to the network slice allowed to access including a cell of a network slice corresponding to a current trigger random access service. For example, the at least one suitable cell may include a corresponding cell of one of the at least one network slice, where the corresponding cell provides a current trigger random access service.

The selecting module 330 is configured to select, from the at least one suitable cell, a suitable cell as a target cell.

The access module 340 is configured to access a target network slice of the target cell by using a random access mode, the target network slice being configured to bear the current trigger random access service.

In some embodiments, the apparatus acquires, via a terminal, slice configuration information transmitted by at least one base station, selects a target cell according to the acquired slice configuration information, and accesses a target network slice of the target cell by using a random access mode, so that the current trigger random access service is borne via the target network slice. In this way, it is implemented random access of the terminal when a network slicing technology is used in a radio access network (RAN), it is ensured an access procedure of each network slice is mutually independent, and a service of a network slice does not have a negative effect on other network slices.

In an alternative embodiment provided based on the embodiment as shown in FIG. 3, the access module 340 includes an acquiring submodule, a selecting submodule, and an access submodule.

The acquiring submodule is configured to acquire preamble configuration information transmitted by a target base station corresponding to the target cell, the preamble configuration information being used for indicating an alternative preamble resource when accessing each network slice of the target cell.

The selecting submodule is configured to select, according to the preamble configuration information, a preamble code from the alternative preamble resource when accessing the target network slice of the target cell.

The access submodule is configured to access the target network slice of the target cell by using the random access mode according to the selected preamble code.

In another alternative embodiment provided based on the embodiment as shown in FIG. 3, the slice configuration information includes at least one of: slice ID information, slice type information, and service type information. The slice ID information indicates an ID of the network slice allowed to access in the cell corresponding to the base station. The slice type information indicates a type of the network slice allowed to access in the cell corresponding to the base station. The service type information indicates a service type corresponding to the network slice allowed to access in the cell corresponding to the base station.

In another alternative embodiment provided based on the embodiment as shown in FIG. 3, the apparatus further includes a second determining module.

The second determining module is configured to determine the current trigger random access service according to an uplink service requirement or a downlink service requirement.

In another alternative embodiment provided based on the embodiment as shown in FIG. 3, the apparatus further includes a first receiving module and a modifying module.

The first receiving module is configured to receive an RRC connection reconfiguration message transmitted by a target base station, the RRC connection reconfiguration message including: at least one network slice ID, and RRC connection reconfiguration information respectively corresponding to each network slice ID.

The modifying module is configured to modify, for a network slice indicated by each network slice ID, an RRC connection related to the network slice according to the RRC connection reconfiguration information corresponding to the network slice ID.

In another alternative embodiment provided based on the embodiment as shown in FIG. 3, the apparatus further includes: a first transmitting module.

The first transmitting module is configured to transmit a buffer status report to a target base station, the buffer status report including: at least one network slice ID, and a cache status respectively corresponding to a network slice indicated by each network slice ID.

In another alternative embodiment provided based on the embodiment as shown in FIG. 3, the apparatus further includes a second receiving module.

The second receiving module is configured to: receive uplink resource allocation information transmitted by a target base station, the uplink resource allocation information including: at least one network slice ID, and an uplink resource correspondingly allocated to a network slice indicated by each network slice ID; and/or receive downlink resource allocation information transmitted by the target base station, the downlink resource allocation information including: at least one network slice ID, and a downlink resource correspondingly allocated to a network slice indicated by each network slice ID.

In another alternative embodiment provided based on the embodiment as shown in FIG. 3, the apparatus may further include a generating module.

The generating module is configured to generate a MAC PDU respectively corresponding to each network slice by multiplexing data transferred by a radio bearer of each network slice by means of a MAC layer.

In another alternative embodiment provided based on the embodiment as shown in FIG. 3, the apparatus further includes: a detecting module, a second transmitting module, and a third transmitting module.

The detecting module is configured to detect, when any network slice triggers a scheduling request, whether a target PUCCH exists in a PUCCH resource of a serving cell corresponding to the network slice, the target PUCCH referring to a PUCCH having a scheduling request resource.

The second transmitting module is configured to transmit the scheduling request to a target base station by means of the target PUCCH when the target PUCCH exists.

The third transmitting module is configured to select, when the target PUCCH does not exist, a random access channel from the serving cell corresponding to the network slice or a primary serving cell to transmit a random access request to the target base station, a function of the random access request being identical to that of the scheduling request.

In another alternative embodiment provided based on the embodiment as shown in FIG. 3, the apparatus may further include a fourth transmitting module.

The fourth transmitting module is configured to transmit power headroom information to a target base station, the power headroom information including: at least one network slice ID, and a power headroom respectively corresponding to a network slice indicated by each network slice ID.

FIG. 4 is a block diagram showing a wireless network access apparatus according to another exemplary embodiment. The apparatus has functions of implementing the wireless network access method of the above base station. The functions may be implemented either by means of hardware or by executing corresponding software by means of the hardware. The apparatus may include: a first generating module 410, a first broadcasting module 420, a first receiving module 430, and a control module 440.

The first generating module 410 is configured to generate slice configuration information according to the network slice allowed to access in the cell corresponding to the base station.

The first broadcasting module 420 is configured to broadcast the slice configuration information.

The first receiving module 430 is configured to receive a random access message transmitted by a terminal. The random access message is used for requesting to access a target network slice of the cell corresponding to the base station. The random access message is transmitted by the terminal after determining the cell corresponding to the base station as a suitable cell. The suitable cell refers to the network slice allowed to access comprising a cell of a network slice corresponding to a current trigger random access service. The target network slice is configured to bear the current trigger random access service.

The control module 440 is configured to control the terminal to access the target network slice according to the random access message.

In conclusion, the apparatus provided by this embodiment generates slice configuration information according to the network slice allowed to access in the cell corresponding to the base station, broadcasts the slice configuration information, so that the terminal selects a target cell according to the acquired slice configuration information, and accesses a target network slice of the target cell by using a random access mode, so that the current trigger random access service is borne via the target network slice. In this way, it is implemented random access of the terminal when a network slicing technology is used in a radio access network (RAN), it is ensured an access procedure of each network slice is mutually independent, and a service of a network slice does not have a negative effect on other network slices.

In an alternative embodiment provided based on the embodiment as shown in FIG. 4, the apparatus further includes an allocating module, a second generating module, and a second broadcasting module.

The allocating module is configured to allocate a preamble resource to each network slice of the cell corresponding to the base station.

The second generating module is configured to generate preamble configuration information. The preamble configuration information indicates an alternative preamble resource when accessing each network slice of the cell corresponding to the base station.

The second broadcasting module is configured to broadcast the preamble configuration information. The terminal is configured to select, according to the preamble configuration information in a process of accessing the target network slice by using a random access mode, a preamble code from the alternative preamble resource when accessing the target network slice.

In another alternative embodiment provided based on the embodiment as shown in FIG. 4, the slice configuration information includes at least one of: slice ID information, slice type information, and service type information.

The slice ID information indicates an ID of the network slice allowed to access in the cell corresponding to the base station. The slice type information indicates a type of the network slice allowed to access in the cell corresponding to the base station. The service type information indicates a service type corresponding to the network slice allowed to access in the cell corresponding to the base station.

In another alternative embodiment provided based on the embodiment as shown in FIG. 4, the apparatus further includes: a first transmitting module.

The first transmitting module is configured to transmit an RRC connection reconfiguration message to the terminal. The RRC connection reconfiguration message includes: at least one network slice ID, and RRC connection reconfiguration information respectively corresponding to each network slice ID.

In another alternative embodiment provided based on the embodiment as shown in FIG. 4, the apparatus further includes a second receiving module.

The second receiving module is configured to receive a buffer status report transmitted by the terminal. The buffer status report includes: at least one network slice ID, and a cache status respectively corresponding to a network slice indicated by each network slice ID.

In another alternative embodiment provided based on the embodiment as shown in FIG. 4, the apparatus further includes a second transmitting module.

The second transmitting module is configured to: transmit uplink resource allocation information to the terminal, the uplink resource allocation information including: at least one network slice ID, and an uplink resource correspondingly allocated to a network slice indicated by each network slice ID; and/or transmit downlink resource allocation information to the terminal, the downlink resource allocation information including: at least one network slice ID, and a downlink resource correspondingly allocated to a network slice indicated by each network slice ID.

In another alternative embodiment provided based on the embodiment as shown in FIG. 4, the apparatus further includes a third receiving module.

The third receiving module is configured to receive a scheduling request transmitted by the terminal via a target PUCCH when detecting that the target PUCCH exists in a PUCCH resource of a serving cell corresponding to a network slice requesting to trigger a scheduling request, or receive a random access request transmitted by the terminal via a random access channel selected from the serving cell corresponding to the network slice or a primary serving cell when detecting that the target PUCCH does not exist in the PUCCH resource of the serving cell corresponding to the network slice requesting to trigger the scheduling request; The target PUCCH refers to a PUCCH having a scheduling request resource, and a function of the random access request is identical to that of the scheduling request.

In another alternative embodiment provided based on the embodiment as shown in FIG. 4, the apparatus further includes a fourth receiving module.

The fourth receiving module is configured to receive power headroom information transmitted by the terminal. The power headroom information includes: at least one network slice ID, and a power headroom respectively corresponding to a network slice indicated by each network slice ID.

An exemplary embodiment of the present disclosure also provides a wireless network access system (also referred to as a communication system), which includes a terminal and a base station. The terminal includes the wireless network access apparatus provided by the embodiment as shown in FIG. 3 or any alternative embodiment provided based on the embodiment as shown in FIG. 3. The base station includes the wireless network access apparatus provided by the embodiment as shown in FIG. 4 or any alternative embodiment provided based on the embodiment as shown in FIG. 4.

It should be explained that, when the apparatus provided by the above embodiments implements the functions thereof, division of the above functional modules is described as an example. In actual application, the above functions may be allocated to different functional modules for implementation according to actual needs. That is, the content structure of the device is divided into different functional modules to accomplish part or all of the functions described as above.

With regard to the apparatus in the foregoing embodiments, concrete manners for executing operations by modules thereof have been described in detail in the embodiments related to the method, and thus are not elaborated herein.

An exemplary embodiment of the present disclosure also provides a wireless network access apparatus, which can implement the wireless network access method of a terminal provided by the present disclosure. The apparatus includes: a processor, and a memory configured to store executable instructions of the processor. The processor is configured to:
acquire slice configuration information transmitted by at least one base station, the slice configuration information being used for indicating a network slice allowed to access in a cell corresponding to the base station;
determine at least one suitable cell according to the slice configuration information, the suitable cell referring to the network slice allowed to access including a cell of a network slice corresponding to a current trigger random access service;
select, from the at least one suitable cell, a suitable cell as a target cell; and
access a target network slice of the target cell by using a random access mode, the target network slice being configured to bear the current trigger random access service.

Alternatively or additionally, the processor is configured to:
acquire preamble configuration information transmitted by a target base station corresponding to the target cell, the preamble configuration information being used for indicating an alternative preamble resource when accessing each network slice of the target cell;
select, according to the preamble configuration information, a preamble code from the alternative preamble resource when accessing the target network slice of the target cell; and
access the target network slice of the target cell by using the random access mode according to the selected preamble code.

Alternatively or additionally, the processor is further configured to:
determine the current trigger random access service according to an uplink service requirement or a downlink service requirement.

Alternatively or additionally, the processor is further configured to:
receive an RRC connection reconfiguration message transmitted by a target base station, the RRC connection reconfiguration message including: at least one network slice ID, and RRC connection reconfiguration information respectively corresponding to each network slice ID; and
modify, for a network slice indicated by each network slice ID, an RRC connection related to the network slice according to the RRC connection reconfiguration information corresponding to the network slice ID.

Alternatively or additionally, the processor is further configured to:
transmit a buffer status report to a target base station, the buffer status report including: at least one network slice ID, and a cache status respectively corresponding to a network slice indicated by each network slice ID.

Alternatively or additionally, the processor is further configured to:
receive uplink resource allocation information transmitted by a target base station, the uplink resource allocation information including: at least one network slice ID, and an uplink resource correspondingly allocated to a network slice indicated by each network slice ID;
and/or
receive downlink resource allocation information transmitted by the target base station, the downlink resource allocation information including: at least one network slice ID, and a downlink resource correspondingly allocated to a network slice indicated by each network slice ID.

Alternatively or additionally, the processor is further configured to:
generate a MAC PDU respectively corresponding to each network slice by multiplexing data transferred by a radio bearer of each network slice by means of a media access control MAC layer.

Alternatively or additionally, the processor is further configured to:
detect, when any network slice triggers a scheduling request, whether a target PUCCH exists in a PUCCH resource of a serving cell corresponding to the network slice, the target PUCCH referring to a PUCCH having a scheduling request resource;
transmit the scheduling request to a target base station by means of the target PUCCH when the target PUCCH exists;
select, when the target PUCCH does not exist, a random access channel from the serving cell corresponding to the network slice or a primary serving cell to transmit a random access request to the target base station, a function of the random access request being identical to that of the scheduling request.

Alternatively or additionally, the processor is further configured to:
transmit power headroom information to a target base station, the power headroom information including: at least one network slice ID, and a power headroom respectively corresponding to a network slice indicated by each network slice ID.

An exemplary embodiment of the present disclosure further provides a wireless network access apparatus, which can implement the wireless network access method of a base station provided by the present disclosure. The apparatus includes: a processor, and a memory configured to store executable instructions of the processor. The processor is configured to:
generate slice configuration information according to the network slice allowed to access in the cell corresponding to the base station;
broadcast the slice configuration information;
receive a random access message transmitted by a terminal, the random access message being used for requesting to access a target network slice of the cell corresponding to the base station, the random access message being transmitted by the terminal after determining the cell corresponding to the base station as a suitable cell, the suitable cell referring to the network slice allowed to access including a cell of a network slice corresponding to a current trigger random access service, the target network slice being configured to bear the current trigger random access service; and
control the terminal to access the target network slice according to the random access message.

Alternatively or additionally, the processor is further configured to:
allocate a preamble resource to each network slice of the cell corresponding to the base station;
generate preamble configuration information, the preamble configuration information being used for indicating an alternative preamble resource when accessing each network slice of the cell corresponding to the base station; and
broadcast the preamble configuration information, the terminal being configured to select, according to the preamble configuration information in a process of accessing the target network slice by using a random access mode, a preamble code from the alternative preamble resource when accessing the target network slice.

Alternatively or additionally, the processor is further configured to:
transmit an RRC connection reconfiguration message to the terminal, the RRC connection reconfiguration message including: at least one network slice ID, and RRC connection reconfiguration information respectively corresponding to each network slice ID.

Alternatively or additionally, the processor is further configured to:
receive a buffer status report transmitted by the terminal, the buffer status report including: at least one network slice ID, and a cache status respectively corresponding to a network slice indicated by each network slice ID.

Alternatively or additionally, the processor is further configured to:
transmit uplink resource allocation information to the terminal, the uplink resource allocation information including: at least one network slice ID, and an uplink resource correspondingly allocated to a network slice indicated by each network slice ID;
and/or
transmit downlink resource allocation information to the terminal, the downlink resource allocation information including: at least one network slice ID, and a downlink resource correspondingly allocated to a network slice indicated by each network slice ID.

Alternatively or additionally, the processor is further configured to:
receive a scheduling request transmitted by the terminal via a target PUCCH when detecting that the target PUCCH exists in a PUCCH resource of a serving cell corresponding to a network slice requesting to trigger a scheduling request, or receive a random access request transmitted by the terminal via a random access channel selected from the serving cell corresponding to the network slice or a primary serving cell when detecting that the target PUCCH does not exist in the PUCCH resource of the serving cell corresponding to the network slice requesting to trigger the scheduling request.

The target PUCCH refers to a PUCCH having a scheduling request resource, and a function of the random access request is identical to that of the scheduling request.

Alternatively or additionally, the processor is further configured to:
receive power headroom information transmitted by the terminal, the power headroom information including: at least one network slice ID, and a power headroom respectively corresponding to a network slice indicated by each network slice ID.

The solutions provided by the embodiments of the present disclosure are introduced above mainly taking the base station and the terminal as examples. It is to be understood that to implement the above functions, the base station and the terminal include corresponding hardware structures and/or software modules executing various functions. In combination with units and algorithm steps of each example described in the embodiments disclosed in the present disclosure, the embodiments of the present disclosure can be implemented in the form of hardware or by combining the hardware and computer software. Whether a certain function is executed in a hardware mode or a computer software mode depends on specific applications and design constraints on the technical solutions. Those skilled in the art may use different methods to implement the functions set forth in each of the specific applications. However, the implementation shall be not believed beyond the scope of the technical solutions of the embodiments of the present disclosure.

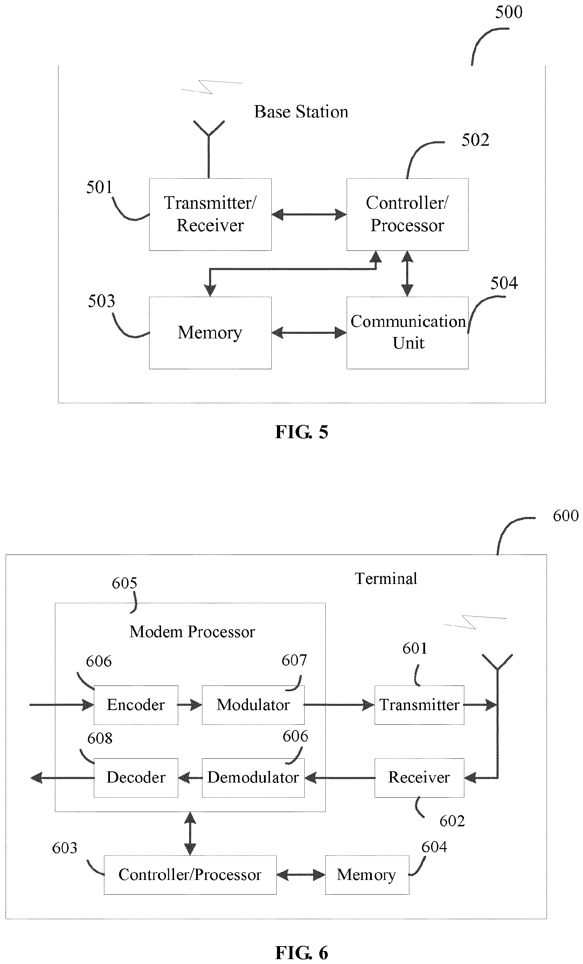

FIG. 5 is a schematic structural diagram of a base station shown according to an exemplary embodiment.

The base station 500 includes a transmitter/receiver 501 and a processor 502. The processor 502 also may be a controller, which is expressed as "controller/processor 502" in FIG. 5. The transmitter/receiver 501 is configured to transmit/receive information between the base station and the terminal in the above embodiment, and support the base station to communicate with other network entities. The processor 502 executes various functions for communicating with the terminal. In an uplink, an uplink signal from the terminal is received via an antenna, demodulated (for example, a high-frequency signal is demodulated into a baseband signal) by the receiver 501, and further processed by the processor 502 to recover service data and signaling information transmitted by the terminal. In a downlink, the service data and the signaling message are processed by the processor 502, modulated (for example, the baseband signal is modulated into the high-frequency signal) by the transmitter 501 to generate a downlink signal, and transmitted to the terminal via the antenna. It is to be noted that the above demodulation or modulation function also may be achieved by the processor 502. For example, the processor 502 also is configured to perform each step at the base station side in the above method embodiment, and/or other steps of the technical solution set forth in the embodiments of the present disclosure.

Further, the base station 500 may further include a memory 503, which is configured to store program codes and data of the base station 500. In addition, the base station may further include a communication unit 504. The communication unit 504 is configured to support the base station to communicate with other network entities (for example, a network device in a core network, and so on). For example, in the LTE system, the communication unit 504 may be an S1-U interface, which is configured to support the base station to communicate with a serving gateway (S-GW). Alternatively or additionally, the communication unit 504 also may be an S1-MME interface, which is configured to support the base station to communicate with a mobility management entity (MME).

It is to be understood that FIG. 5 merely illustrates a simplified design of the base station 500. In practical application, the base station 500 may include any number of transmitters, receivers, processors, controllers, memories, and communication units, etc. All the base stations that may implement the embodiments of the present disclosure fall within the scope of protection of the embodiments of the present disclosure.

FIG. 6 is a schematic structural diagram of a terminal shown according to an exemplary embodiment.

The terminal 600 includes a transmitter 601, a receiver 602, and a processor 603. The processor 603 also may be a controller, which is expressed as "controller/processor 603" in FIG. 6. Alternatively or additionally, the terminal 600 may further include a modem processor 605, where the modem processor 605 may include an encoder 606, a modulator 607, a decoder 608, and a demodulator 606.

In one example, the transmitter 601 regulates (for example, analog conversion, filtering, amplification, up-conversion, and so on) the output sample, and generates an uplink signal. The uplink signal is transmitted by an antenna to the base station in the above embodiment. In the downlink, the antenna receives a downlink signal transmitted by the base station in the above embodiment. The receiver 602 regulates (for example, filtering, amplification, down-conversion, digitization, and so on) a signal received from the antenna and provides an input sample. In the modem processor 605, the encoder 606 receives the service data and the signaling message to be transmitted on the uplink, and processes (for example, formatting, encoding, and interleaving) the service data and the signaling message. The modulator 607 further processes (for example, symbol mapping and modulating) the encoded service data and the signaling message and provides an output sample. The demodulator 606 processes (for example, demodulating) the input sample and provides a symbol estimation. The decoder 608 processes (for example, deinterleaving and decoding) the symbol estimation and provides the decoded data and the signaling message to the terminal 600. The encoder 606, the modulator 607, the demodulator 606, and the decoder 608 may be implemented by the synthetic modem processor 605. These units are processed according to wireless access technologies (for example, access technologies of the LTE and other evolved systems) used in the radio access network. It is to be noted that when the terminal 600 does not include the modem processor 605, the above functions of the modem processor 605 also may be achieved by the processor 603.

The processor 603 controls and manages the action of the terminal 600 to execute the processing procedures performed by the terminal 600 in the above embodiments of the present disclosure. For example, the processor 603 also is configured to perform each step at the terminal in the above method embodiment, and/or other steps of the technical solutions set forth in the embodiments of the present disclosure.

Further, the terminal 600 may further include a memory 604, which is configured to store program codes and data for the terminal 600.

The processor configured to execute the functions of the above base station or the terminal in the embodiments of the present disclosure may be a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. The processor may implement or execute various exemplary logic blocks, modules, and circuits set forth in combination with the contents disclosed in the embodiments of the present disclosure. The processor also may be a combination of implementing the computing function, for example, a combination including one or more microprocessors, or a combination of the DSP and the microprocessor, etc.

The steps of the method or algorithm set forth in combination with the contents disclosed in the embodiments of the present disclosure may be implemented by way of hardware, or may be implemented by way of executing software instructions by the processor. The software instructions may be constituted by corresponding software modules, and the software modules may be stored in an random access memory (RAM), a flash memory, a read only memory (ROM), an erasable programmable ROM (EPROM), an electrically EPROM (EEPROM), a register, a hard disk, a mobile hard disk, a CD-ROM, or any other form storage media well known in the art. An exemplary storage medium is coupled to the processor, so that the processor can read/write information from/to the storage medium. Of course, the storage medium also may be a constituent part of the processor. The processor and the storage medium may host in an ASIC. In addition, the ASIC may be positioned in the base station or the terminal. Of course, the processor and the storage medium also may exist in the base station or the terminal in the form of discrete components.

Those skilled in the art should realize that in the above one or more examples, the functions set forth in the embodiments of the present disclosure may be implemented by hardware, software, firmware, or any combination thereof. When the software implementation is used, these functions may be stored in a computer-readable medium or transmitted as one or more instructions or codes on the computer-readable medium. The computer-readable medium includes a computer storage medium and a communication medium, where the communication medium includes any medium which is helpful for transferring the computer program from one site to another site. The storage medium may be any usable medium accessible by a general or dedicated computer.

An embodiment of the present disclosure also provides a computer storage medium, which is configured to store computer software instructions used by the base station, including programs designed for executing the wireless network access method used in the base station.

An embodiment of the present disclosure also provides a computer storage medium, which is configured to store computer software instructions used by the terminal, including programs designed for executing the wireless network access method used in the terminal.

It is to be understood that "a plurality of" as mentioned herein refers to two or more. The "and/or" used for describing an association relationship between association objects represents presence of three relationships. For example, A and/or B may represent presence of the A only, presence of both the A and the B, and presence of the B only. Character "/" generally indicates that an "or" relationship is between the association objects.

## Claims

1. A wireless network access method, comprising:
acquiring (203) slice configuration information transmitted by at least one base station, the slice configuration information indicating a network slice allowed to access in a cell corresponding to the base station;
determining (204) at least one suitable cell according to the slice configuration information, the suitable cell comprising a corresponding cell of one of the at least one network slice, the corresponding cell providing a current trigger random access service;
selecting (205) one of the at least one suitable cell as a target cell; and
accessing (206) a target network slice of the target cell by using a random access mode, the target network slice being configured to bear the current trigger random access service.

2. The method according to claim 1, wherein accessing (206) the target network slice of the target cell by using the random access mode comprises:
acquiring preamble configuration information transmitted by a target base station corresponding to the target cell, the preamble configuration information indicating an alternative preamble resource when accessing each network slice of the target cell;
selecting, according to the preamble configuration information, a preamble code from the alternative preamble resource when accessing the target network slice of the target cell; and
accessing the target network slice of the target cell by using the random access mode according to the selected preamble code.

3. The method according to claim 1 or claim 2, wherein the slice configuration information comprises at least one of: slice ID information, slice type information, and service type information;
wherein the slice ID information indicates an ID of the network slice allowed to access in the cell corresponding to the base station;
wherein the slice type information indicates a type of the network slice allowed to access in the cell corresponding to the base station; and
wherein the service type information indicates a service type corresponding to the network slice allowed to access in the cell corresponding to the base station.

4. The method according to any one of claims 1 to 3, further comprising:
determining the current trigger random access service according to an uplink service requirement or a downlink service requirement, and/or
further comprising:
receiving a radio resource control (RRC) connection reconfiguration message transmitted by a target base station, the RRC connection reconfiguration message comprising: at least one network slice ID, and RRC connection reconfiguration information respectively corresponding to each network slice ID; and
modifying, for a network slice indicated by each network slice ID, an RRC connection related to the network slice according to the RRC connection reconfiguration information corresponding to the network slice ID.

5. The method according to any one of claims 1 to 4, further comprising:
transmitting a buffer status report to a target base station, the buffer status report comprising: at least one network slice ID, and a cache status respectively corresponding to a network slice indicated by each network slice ID, and/or
further comprising at least one of:
receiving uplink resource allocation information transmitted by a target base station, the uplink resource allocation information comprising: at least one network slice ID, and an uplink resource correspondingly allocated to a network slice indicated by each network slice ID;
and
receiving downlink resource allocation information transmitted by the target base station, the downlink resource allocation information comprising: at least one network slice ID, and a downlink resource correspondingly allocated to a network slice indicated by each network slice ID.

6. The method according to any one of claims 1 to 5, further comprising:
generating a MAC protocol data unit (PDU) respectively corresponding to each network slice by multiplexing data transferred by a radio bearer of each network slice by means of a media access control (MAC) layer, and/or
further comprising:
determining, when any network slice triggers a scheduling request, whether a target PUCCH exists in a physical uplink control channel (PUCCH) resource of a serving cell corresponding to the network slice, the target PUCCH referring to a PUCCH having a scheduling request resource;
transmitting the scheduling request to a target base station by means of the target PUCCH when the target PUCCH exists; or
selecting, when the target PUCCH does not exist, a random access channel from the serving cell corresponding to the network slice or a primary serving cell to transmit a random access request to the target base station, a function of the random access request being identical to that of the scheduling request.

7. The method according to any one of claims 1 to 6, further comprising:
transmitting power headroom information to a target base station, the power headroom information comprising: at least one network slice ID, and a power headroom respectively corresponding to a network slice indicated by each network slice ID.

8. A wireless network access method, comprising:
generating (201) slice configuration information according to a network slice allowed to access in a cell corresponding to the base station;
broadcasting (202) the slice configuration information;
receiving a random access message transmitted by a terminal, the random access message being used for requesting to access a target network slice of the cell corresponding to the base station, the random access message being transmitted by the terminal after determining the cell corresponding to the base station as a suitable cell, the suitable cell comprising a corresponding cell of a network slice providing a current trigger random access service, the target network slice being configured to bear the current trigger random access service; and
controlling the terminal to access the target network slice according to the random access message.

9. The method according to claim 8, further comprising:
allocating a preamble resource to each network slice of the cell corresponding to the base station;
generating preamble configuration information, the preamble configuration information indicating an alternative preamble resource when accessing each network slice of the cell corresponding to the base station; and
broadcasting the preamble configuration information, the terminal being configured to select, according to the preamble configuration information in a process of accessing the target network slice by using a random access mode, a preamble code from the alternative preamble resource when accessing the target network slice.

10. The method according to claim 8 or claim 9, wherein the slice configuration information comprises at least one of: slice ID information, slice type information, and service type information;
wherein the slice ID information indicates an ID of the network slice allowed to access in the cell corresponding to the base station;
wherein the slice type information indicates a type of the network slice allowed to access in the cell corresponding to the base station; and
wherein the service type information indicates a service type corresponding to the network slice allowed to access in the cell corresponding to the base station.

11. The method according to any one of claims 8 to 10, further comprising:
transmitting a radio resource control (RRC) connection reconfiguration message to the terminal, the RRC connection reconfiguration message comprising: at least one network slice ID, and RRC connection reconfiguration information respectively corresponding to each network slice ID, and/or
further comprising:
receiving a buffer status report transmitted by the terminal, the buffer status report comprising: at least one network slice ID, and a cache status respectively corresponding to a network slice indicated by each network slice ID.

12. The method according to any one of claims 8 to 11, further comprising at least one of:
transmitting uplink resource allocation information to the terminal, the uplink resource allocation information comprising: at least one network slice ID, and an uplink resource correspondingly allocated to a network slice indicated by each network slice ID;
and
transmitting downlink resource allocation information to the terminal, the downlink resource allocation information comprising: at least one network slice ID, and a downlink resource correspondingly allocated to a network slice indicated by each network slice ID.

13. The method according to any one of claims 8 to 12, further comprising:
receiving a scheduling request transmitted by the terminal via a target PUCCH when detecting that the target PUCCH exists in a physical uplink control channel (PUCCH) resource of a serving cell corresponding to a network slice requesting to trigger a scheduling request, or receiving a random access request transmitted by the terminal via a random access channel selected from the serving cell corresponding to the network slice or a primary serving cell when detecting that the target PUCCH does not exist in the PUCCH resource of the serving cell corresponding to the network slice requesting to trigger the scheduling request;
wherein the target PUCCH refers to a PUCCH having a scheduling request resource, and a function of the random access request is identical to that of the scheduling request.

14. The method according to any one of claims 8 to 13, further comprising:
receiving power headroom information transmitted by the terminal, the power headroom information comprising: at least one network slice ID, and a power headroom respectively corresponding to a network slice indicated by each network slice ID.

15. A wireless network access apparatus, comprising:
an acquiring module (310), configured to acquire slice configuration information transmitted by at least one base station, the slice configuration information indicating at least one network slice allowed to access in a cell corresponding to the base station;
a first determining module (320), configured to determine at least one suitable cell comprising a corresponding cell of one of the at least one network slice, the corresponding cell providing a current trigger random access service;
a selecting module (330), configured to select one of the at least one suitable cell as a target cell; and
an access module (340), configured to access a target network slice of the target cell by using a random access mode, the target network slice being configured to bear the current trigger random access service.

16. A wireless network access apparatus, comprising:
a first generating module (410), configured to generate slice configuration information according to a network slice allowed to access in a cell corresponding to the base station;
a first broadcasting module (420), configured to broadcast the slice configuration information;
a first receiving module (430), configured to receive a random access message transmitted by a terminal, the random access message being used for requesting to access a target network slice of the cell corresponding to the base station, the random access message being transmitted by the terminal after determining the cell corresponding to the base station as a suitable cell, the suitable cell comprising a corresponding cell of a network slice providing a current trigger random access service, the target network slice being configured to bear the current trigger random access service; and
a control module (440), configured to control the terminal to access the target network slice according to the random access message.

17. A wireless network access system, comprising: a terminal and a base station;
the terminal comprising the wireless network access apparatus according to claim 15; and
the base station comprising the wireless network access apparatus according to claim 16.
